# EUROPEAN PATENT APPLICATION

(11) **EP 2 775 222 A2**
(43) Date of publication of application: **10.09.2014**
(21) Application number: 14157994.6
(22) Date of filing: 06.03.2014
(51) Int. Cl.: F24D 19/00, F24D 19/10, F16K 31/02

(54) **Radiator, and method for the control thereof**

(30) Priority: 08.03.2013 FI 20135221
(71) Applicant: Rettig ICC B.V., 6199 AA Maastricht-Airport (NL)
(72) Inventor: Iivonen, Mikko, 00630 Helsinki (FI); Struyf, Johan, 3090 Overijse (BE)
(74) Representative: Kolster Oy Ab

(57) **Abstract**

The invention relates to a radiator comprising, as viewed with respect to a space to be heated, a front radiator plate (2) and a rear radiator plate (3), a valve fitting located in one top corner of the radiator, between the radiator plates (2, 3), and opening into the both radiator plates for delivering heat transfer liquid to the radiator, a valve fitting located in the other top corner of the radiator, between the radiator plates, for enabling a flow of the heat transfer liquid between the radiator plates, and a valve fitting (6) located in a lower part of the radiator, between the radiator plates, for discharging heat transfer liquid from the radiator. The valve fitting (6) located in the lower part of the radiator is provided with a stop valve (8') for adjusting the amount of heat transfer liquid being discharged from the rear radiator plate (3).

## Description

### Background of the invention

The invention relates to a radiator comprising a front radiator plate designed to face a space to be heated; a rear radiator plate designed to reside behind the front radiator plate, on the side of a wall or a corresponding fastening surface of the space to be heated; a valve fitting located in one top corner of the radiator, between the radiator plates, and opening into the both radiator plates for delivering heat transfer liquid to the radiator; a valve fitting located in the other top corner of the radiator, between the radiator plates, for enabling a flow of the heat transfer liquid between the radiator plates; and a valve fitting located in a lower part of the radiator, between the radiator plates, for discharging heat transfer liquid from the radiator. The invention further relates to a method of controlling such a radiator, the valve fitting for delivering heat transfer liquid to the radiator being provided with a radiator valve with a thermostat.

The trend today is to produce as efficient energy saving as possible, which puts pressure also on radiator design. A heat-radiating surface should heat the space to be heated as efficiently and economically as possible. In this sense, optimization of the heat-radiating surfaces is particularly challenging in double-plate radiators which operate by heat transfer liquid circulation.

In the double-plate radiators, heat radiation is most efficiently produced by a radiator plate which is directed toward the space to be heated. Therefore, it would be advantageous to use and prefer this part of the radiator for controlling the liquid circulation and only use the rear radiator plate at full capacity when the capacity of the front radiator plate does not suffice to heat the room. When liquid mainly circulates only through the front radiator plate, it is still possible to make a vast majority of the radiation heat of the radiator available for use, but the temperature of the liquid circulating through the radiator drops considerably less as compared with a situation in which the circulation takes place freely through both radiator plates.

In the above-described arrangement, energy use would be ideal if the existing technology presented no problems that do not enable this. In the solution according to the present prior art, liquid is delivered in a controlled manner through an upper valve fitting or upper valve fittings to the rear radiator plate, wherefrom it is then freely discharged into a discharge fitting of the radiator. This control utilizes all modern electrical monitoring of temperature differences and electrical control of valves provided in the valve fittings. The purpose herein is in a controlled manner to adjust the amount of liquid flowing into the rear radiator plate, but even if a port for liquid flow were as small as it is possible to arrange with no risk of clogging, the liquid flow to the rear radiator plate has always proven to be greater than desired. If the port is very small, the rate of flow is even greater. In addition to the fact that this arrangement is in practice inoperative, at least in a desired manner, it also makes noise and causes deaeration problems in the entire radiator.

### Summary of the invention

An object of the invention is thus to develop the radiator of the type discussed above and the control thereof so as to enable the above-described drawbacks to be eliminated. This object is achieved by a radiator according to the invention, which is characterized in that the valve fitting located in the lower part of the radiator is provided with a stop valve for adjusting the amount of heat transfer liquid being discharged from the rear radiator plate. The method is characterized in that the stop valve provided in the valve fitting located in the lower part of the radiator is controlled according to a particular temperature difference between a set temperature of the thermostat and the temperature of the space to be heated.

The invention is based on, instead of the previous "series connection control" of radiator plates, applying "parallel connection control", in other words control of liquid circulation wherein the upper valve fittings are always open into both radiator plates but wherein the rear radiator plate has "no room" for new warm liquid until liquid is removed therefrom in a controlled manner through a closable and openable lower valve fitting. Thus, new warm liquid becomes layered in the rear radiator plate as necessary. Naturally, full capacity is achieved when the stop valve is continuously open. The radiator according to the invention always operates as desired, without any further problems.

Preferred embodiments of the invention, in particular preferred structures of the stop valve and control thereof, are disclosed in the dependent claims and in the following detailed description of the invention.

### List of Figures

The invention is now described in closer detail by means of some preferred embodiments and with reference to the accompanying drawings, in which
Figure 1 is a perspective view showing a simplified radiator according to the invention;
Figure 2 is a cross section of a preferred embodiment of a lower valve fitting;
Figure 3 is an end view showing a valve insert shown in Figure 2, as seen from the side of a rear radiator plate;
Figure 4 is an end view showing the valve insert shown in Figure 2, as seen from the side of a front radiator plate;
Figure 5 is a cross section of another preferred embodiment of the lower valve fitting;
Figure 6 is an end view showing a valve insert shown in Figure 5, as seen from the side of the rear radiator plate; and
Figure 7 is an end view showing the valve insert shown in Figure 5, as seen from the side of the front radiator plate.

### Detailed description of the invention

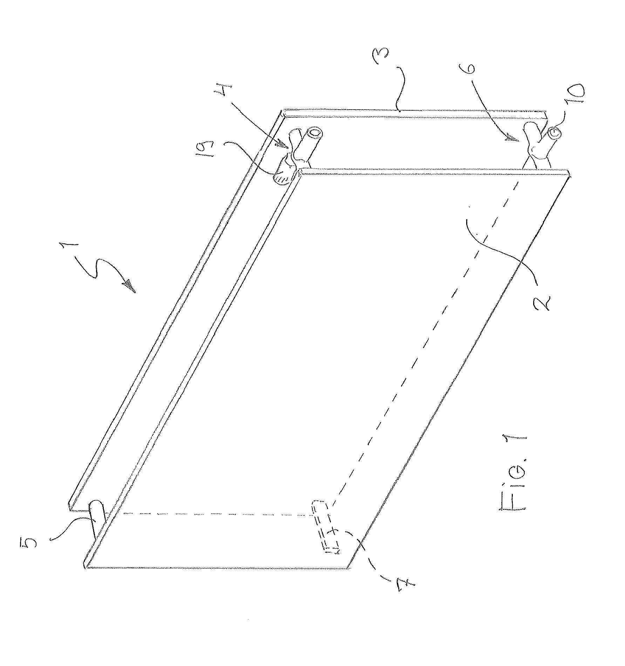

Referring to Figure 1, a radiator 1 according to the invention is provided with a front radiator plate 2 designed to face a space to be heated, and a rear radiator plate 3 designed to reside behind the front radiator plate 2, on the side of a wall or a corresponding fastening surface of the space to be heated. In one top corner of the radiator 1, between the radiator plates 2 and 3, and opening into the both radiator plates 2 and 3 is provided a valve fitting 4 for delivering heat transfer liquid to the radiator 1, and in the other top corner of the radiator 1, between the radiator plates 2 and 3, a valve fitting 5 is provided for enabling a flow of the heat transfer liquid between the radiator plates 2 and 3. One lower corner of the radiator 1, in turn, is provided with a valve fitting 6 located between the radiator plates 2 and 3 for discharging heat transfer liquid from the radiator 1. The other lower corner is only provided with a junction piece 7 for the radiator plates 2 and 3 with no liquid connection between the radiator plates 2 and 3.

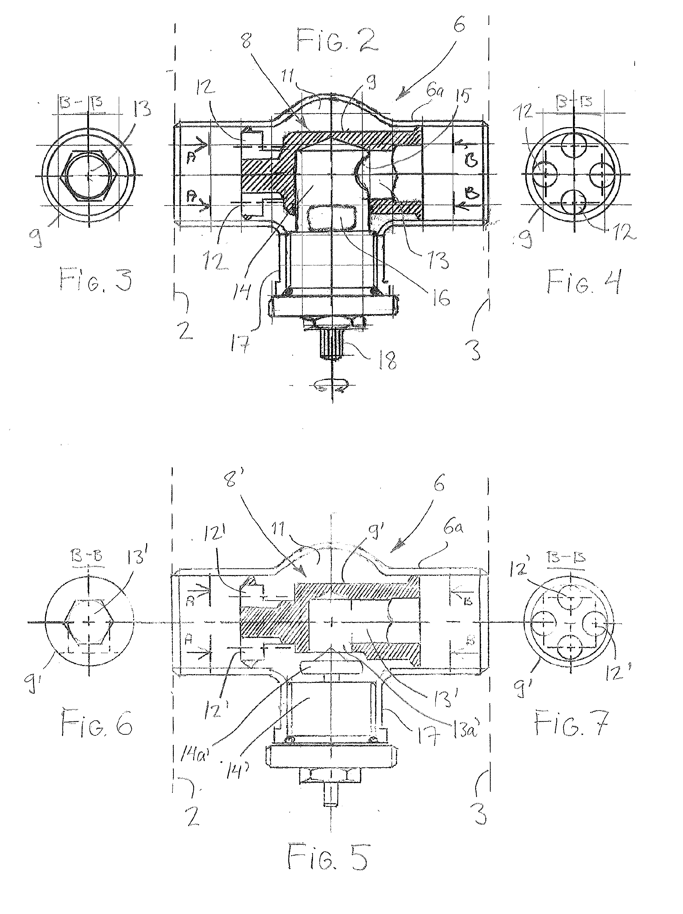

The crucial point of the present invention is that the only valve fitting 6 located in the lower part of the radiator 1 is provided with a stop valve 8; 8' shown in Figures 2 to 7 for adjusting the amount of heat transfer liquid being discharged from the rear radiator 3.

Figures 2 to 4 show a preferred embodiment of the stop valve 8. This stop valve 8 comprises an insert 9 which is inserted into the valve fitting 6 and which, on the side of the front radiator plate 2, is provided with flow ports 12 which open into an interior 11 of the valve fitting 6 connected with an outlet 10 of the valve fitting 6, and which, on the side of the rear radiator plate 3, is provided with a flow channel 13 which also leads to the interior 11 of the valve fitting 6 connected with the outlet 10 of the valve fitting 6. A central part of the insert 9, perpendicularly to the flow channel 13 with respect to an axial direction of the valve fitting, is provided with a turnable closure member 14 provided with flow ports 15 and 16 which, in a determined turning position of the closure member, are connected with the flow channel 13 of the insert 6 and the interior 11 leading to the outlet 10 of the valve fitting 6.

The insert 9 is preferably a separate brass case which is mountable in place by means of threads provided on an outer surface of the insert 9 and an inner surface of the valve fitting 6.

The closure member 14 is supported and pivotably mounted on a sleeve 17 formed in a central part of the valve fitting 6. The turning movement of the closure member 14 between a closed position and a completely opened position of the flow channel 13 is about 30°. In Figure 2, the closure member is shown in an opened position. Most appropriately, this closure member 14 is electrically driven. An electric drive may be arranged in a shaft 18 of the closure member 14 protruding from the sleeve 17.

Figures 5 to 7 show another preferred embodiment of the stop valve 8'. This stop valve 8' comprises an insert 9' which is inserted into the valve fitting 6 and which is almost identical with the insert 9 and which, on the side of the front radiator plate 2, is provided with flow ports 12' which open into the interior 11 of the valve fitting 6 connected with the outlet 10 of the valve fitting 6, and which, on the side of the rear radiator plate 3, is provided with a flow channel 13' which also leads to the interior 11 of the valve fitting 6 connected with the outlet 10 of the valve fitting 6. A base frame 6a of the valve fitting 6 is similar to that in the solution according to Figures 2 to 4, the sleeve 17 of the valve fitting 6 being provided with a closure member 14' which is supported on the sleeve and which is movable perpendicularly to an axial direction of the valve fitting 6 in order to close and open the flow channel 13' of the insert 9' leading to the interior 11 of the valve fitting 6. The closure member 14' is provided with a valve disc 14a' which cooperates with an outlet 13a' of the flow channel 13'. The inserts 9 and 9' differ from one another mostly only as far as the surfaces coming into contact with the closure members 14 and 14' are concerned, which, when using different closure members, is an advantage in terms of manufacturing techniques.

Typically, the closure member 14' is an electromagnetic valve. The electromagnetic valve is probably in practice a more advantageous solution than a turning closure member.

In order to implement the method according to the invention, the valve fitting 4, through which heat transfer liquid is delivered to the radiator 1, is provided with a radiator valve with a thermostat (neither being shown). The radiator valve thermostat arrangement depends on the manner of implementation of the valve fitting 4. The valve fitting 4 may, as distinct from Figure 1, be e.g. provided in connection with an arrangement called an integrated valve structure, in which case the heat transfer liquid is delivered from the lower part of the radiator 1 along a pipe inside the radiator 1 upwards to be subsequently distributed from the upper part of the radiator into the radiator plates 1. However, these arrangements are irrelevant to the invention per se.

In this method, the stop valve 8; 8' provided in the valve fitting 6 located in the lower part of the radiator 1 is controlled according to a particular temperature difference between a set temperature of the thermostat and the temperature of the space to be heated. This temperature difference may be about 1°C, for instance. The stop valve 8; 8' is opened when the temperature of the space to be heated is lower than the set value of the thermostat by a selected temperature difference. When the temperature difference is smaller, the stop valve 8; 8' is closed, and the heat transfer liquid then again circulates only through the front radiator plate 2.

The control of the stop valve 8; 8' may be implemented preferably electrically by means of electronic communication between the thermostat of the radiator valve and the closure members 14; 14'.

The above description of the invention is only intended to illustrate the basic idea of the invention. A person skilled in the art may thus vary its details within the scope of the attached claims.

## Claims

1. A radiator comprising
a front radiator plate (2) designed to face a space to be heated,
a rear radiator plate (3) designed to reside behind the front radiator plate (2), on the side of a wall or a corresponding fastening surface of the space to be heated,
a valve fitting (4) located in one top corner of the radiator, between the radiator plates (2, 3), and opening into the both radiator plates for delivering heat transfer liquid to the radiator,
a valve fitting (5) located in the other top corner of the radiator, between the radiator plates (2, 3), for enabling a flow of the heat transfer liquid between the radiator plates, and
a valve fitting (6) located in a lower part of the radiator, between the radiator plates (2, 3), for discharging heat transfer liquid from the radiator,
**characterized in that** the valve fitting (6) located in the lower part of the radiator is provided with a stop valve (8; 8') for adjusting the amount of heat transfer liquid being discharged from the rear radiator plate (3).

2. A radiator as claimed in claim 1, **characterized in that** the stop valve (8) comprises an insert (9) which is inserted into the valve fitting (6) and which, on the side of the front radiator plate (2), is provided with flow ports (12) which open into an interior (11) of the valve fitting (6) connected with an outlet (10) of the valve fitting (6), and which, on the side of the rear radiator plate (3), is provided with a flow channel (13) which leads to the interior (11) of the valve fitting (6) connected with the outlet (10) of the valve fitting (6), whereby a central part of the insert (9), perpendicularly to the flow channel (13) with respect to an axial direction of the valve fitting (6), is provided with a turnable closure member (14) provided with flow ports (15, 16) which, in a determined turning position of the closure member (14), are connected with the flow channel (13) of the insert (6) and the interior (11) leading to the outlet (10) of the valve fitting (6).

3. A radiator as claimed in claim 2, **characterized in that** the closure member (14) is supported on a sleeve (17) formed in a central part of the valve fitting (6).

4. A radiator as claimed in claim 2 or 3, **characterized in that** the closure member (14) is electrically driven.

5. A radiator as claimed in claim 2 to 4, **characterized in that** a turning movement of the closure member (14) between a closed position and a completely opened position of the flow channel (13) is about 30°.

6. A radiator as claimed in claim 1, **characterized in that** the stop valve (8') comprises an insert (9') which is inserted into the valve fitting (6) and which, on the side of the front radiator plate (2), is provided with flow ports (12') which open into an interior (11) of the valve fitting (6) connected with an outlet (10) of the valve fitting, and which, on the side of the rear radiator plate (3), is provided with a flow channel (13') which leads to the interior (11) of the valve fitting (6) connected with the outlet (10) of the valve fitting (6), whereby a central part of the valve fitting (6) is provided with a sleeve (17) which is provided with a closure member (14') movable perpendicularly to an axial direction of the valve fitting (6) in order to close and open the flow channel (13') of the insert (9') leading to the interior (11) of the valve fitting (6).

7. A radiator as claimed in claim 6, **characterized in that** the closure member (14') is an electromagnetic valve.

8. A method of controlling a radiator according to any one of claims 1 to 7, a valve fitting (4) for delivering heat transfer liquid to the radiator being provided with a radiator valve with a thermostat, **characterized in that** a stop valve (8; 8') provided in a valve fitting (6) located in a lower part of the radiator is controlled according to a particular temperature difference between a set temperature of the thermostat and the temperature of a space to be heated.

9. A method as claimed in claim 8, **characterized in that** the stop valve (8; 8') is opened when the temperature of the space to be heated is about 1°C lower than a set value of the thermostat.

10. A method as claimed in claim 8 or 9, **characterized in that** the stop valve (8; 8') is controlled electrically.
